# FASCICULE DE BREVET EUROPEEN

(11) **EP 2 655 120 B1**
(45) Date de publication et mention de la délivrance du brevet: **08.05.2019**
(21) Numéro de dépôt: 11791596.7
(22) Date de dépôt: 09.12.2011
(51) Int. Cl.: B60L 3/00, B60L 11/18, H01M 6/50, H01M 10/667, H01M 10/615, H01M 10/625, H01M 10/613

(54) **PROCEDE ET SYSTEME DE REGULATION DE LA TEMPERATURE D'UNE BATTERIE D'ALIMENTATION D'UN VEHICULE A TRACTION ELECTRIQUE ET VEHICULE EQUIPE D'UN TEL SYSTEME**
VERFAHREN UND SYSTEM ZUR STEUERUNG DER BATTERIETEMPERATUR EINES ELEKTRISCH ANGETRIEBENEN FAHRZEUGS UND FAHRZEUG MIT EINEM SOLCHEN SYSTEM
METHOD AND SYSTEM FOR BATTERY TEMPERATURE CONTROL OF ELECTRIC VEHICLE AND VEHICLE PROVIDED WITH SUCH SYSTEM

(30) Priorité: 21.12.2010 FR 1060993
(43) Date de publication de la demande: 30.10.2013
(73) Titulaire: Renault S.A.S., 92100 Boulogne-Billancourt (FR)
(72) Inventeur: YU, Robert, F-78180 Montigny-le-Bretonneux (FR)
(86) Numéro de dépôt international: PCT/EP2011/072272
(87) Numéro de publication internationale: WO 2012/084547

(56) Documents cités:
- CH-A5- 680 579
- US-A1- 2006 048 984
- US-A1- 2010 050 676
- US-A1- 2010 100 266

## Description

L'invention concerne généralement le domaine de la régulation de la température d'une batterie d'alimentation d'un véhicule à traction électrique. La notion de batterie englobe toutes les solutions connues de stockage embarqué d'énergie électrique, par exemple les piles à combustible ou les batteries Lithium-Ion.

L'invention a pour objet plus particulièrement un procédé et un système de régulation de la température d'une batterie d'alimentation d'un véhicule à traction électrique dont la motorisation fait appel à au moins une motorisation électrique. Elle concerne également un véhicule à traction électrique équipé d'un tel système de régulation, ou encore un véhicule thermique équipé d'un tel système de régulation, aussi appelé véhicule hybride.

Ces véhicules à motorisation électrique ou à motorisation hybride comportant au moins une source motrice électrique comprennent, de façon connue, une batterie d'alimentation capable d'effectuer des cycles de charge/décharge et un moteur électrique utilisant l'énergie électrique de la batterie pour fournir une énergie motrice au véhicule. Les véhicules à motorisation hybride comportent les mêmes caractéristiques tout en faisant appel à d'autres sources d'énergie distinctes, classiquement un tel véhicule hybride combine une motorisation thermique à une motorisation électrique.

Lors de l'utilisation de la batterie et notamment lors des cycles de charge/décharge, la batterie produit de la chaleur provenant notamment du comportement résistif des éléments constitutifs de la batterie. Cependant, les performances de ce genre de batterie dépendent fortement de sa température de fonctionnement.

En effet, lorsque la température de fonctionnement est élevée, cela provoque un vieillissement accéléré de la batterie et une autodécharge importante. Au-delà d'un certain seuil de température, le fonctionnement de la batterie pourra être interdit pour éviter toute dégradation irréversible. De plus, en dessous d'une température nominale de fonctionnement (par exemple 20°C pour une batterie au Lithium), les performances de la batterie décroissent en même temps que la température de fonctionnement.

En outre, en raison d'une capacité thermique relativement élevée, ce type de batterie monte lentement en température et est difficile à refroidir. La génération de chaleur étant proportionnelle au carré du courant électrique, une charge très rapide de la batterie (ce qui permet d'améliorer la disponibilité du véhicule tout en limitant les capacités et volumes de batterie embarquée) peut ainsi provoquer une génération de chaleur très importante de la batterie, et dégrader celle-ci.

Dans le cas d'un système de charge rapide de la batterie, le conducteur peut utiliser le véhicule plusieurs fois dans la même journée en chargeant rapidement la batterie après sa décharge dans la limite de la durée de vie de batterie suite à l'utilisation du véhicule. Dans ce cas, la température de la batterie va augmenter continûment jusqu'à atteindre la température autorisée maximale, la batterie n'ayant pas la capacité de se refroidir entre deux cycles de charge rapide de la batterie. Il est alors nécessaire de refroidir la batterie afin de préserver sa durée de vie. D'autre part, la charge de la batterie ne doit pas être réalisée à une température trop basse, au risque de diminuer sa durée de vie.

C'est pourquoi des systèmes de régulation de la température de la batterie ont déjà été mis en oeuvre, pour maintenir la température de la batterie dans une gamme nominale recherchée, tant pour son chauffage au démarrage en cas de température extérieure froide ou en cas de condition de recharge rapide de la batterie, que pour son refroidissement en condition de roulage du véhicule.

De plus, en dehors de la batterie d'alimentation, la chaîne de traction électrique comporte également un moteur électrique et son électronique de puissance, laquelle comprend par exemple un chargeur de la batterie et un onduleur pour transformer le courant continu délivré par la batterie en un courant alternatif alimentant le moteur électrique. Pour un fonctionnement optimal, ces composants électriques du reste de la chaîne de traction électrique doivent également être régulés thermiquement.

Le document US 2006 / 0048984 divulgue un système et une méthode de refroidissement d'une portion d'un véhicule, qui ne permet notamment pas de réchauffer ladite portion. Le document US2010100266 est considéré comme l'état de la technique plus proche et divulgue le préambule de la revendication indépendante 1 et le préambule de la revendication indépendante 4.

Le but de la présente invention est de remédier à ces inconvénients, en proposant une solution de régulation de la température d'une batterie d'alimentation d'un véhicule à traction électrique qui soit notamment simple de conception, rapide à mettre en oeuvre, présentant une consommation énergétique réduite, et ayant de bonnes performances générales.

Le procédé selon l'invention permet de réguler la température de la batterie d'alimentation d'un véhicule à traction électrique. Il comprend une étape de couplage thermique de ladite batterie et de composants électriques du reste de la chaîne de traction électrique du véhicule.

Le procédé peut comprendre l'utilisation d'un circuit de thermorégulation dans lequel circule du fluide caloporteur, ledit circuit étant agencé de sorte à contrôler la température à la fois de ladite batterie et desdits composants électriques par échange thermique avec le fluide caloporteur.

Le procédé peut comprendre une modulation de la température du fluide caloporteur par l'intermédiaire d'au moins un échangeur pour réaliser un échange thermique avec de l'air extérieur au véhicule.

A la suite de l'échange thermique de fluide caloporteur avec de l'air extérieur au véhicule, seule une fraction de fluide caloporteur peut être transférée jusqu'à la batterie pour sa régulation en température, la fraction restante de fluide caloporteur étant transférée directement auxdits composants électriques pour leur régulation en température.

Une fraction de fluide caloporteur transférée à la batterie peut subir un échange thermique supérieur à celui que subit une fraction restante de fluide caloporteur transférée directement auxdits composants électriques, ces échanges thermiques étant réalisés en amont respectivement de la batterie et desdits composants électriques.

Le circuit de thermorégulation comprenant des première et deuxième boucles séparées dans lesquelles circulent respectivement un premier fluide caloporteur en échange thermique avec la batterie et un deuxième fluide caloporteur en échange thermique avec lesdits composants électriques, l'étape de couplage thermique entre la batterie et lesdits composants électriques peut comprendre un transfert thermique d'une boucle à l'autre.

Le transfert thermique peut comprendre l'utilisation d'une machine thermodynamique réversible incluant des premier et deuxième échangeurs respectivement couplés thermiquement aux premier et deuxième fluides caloporteurs.

Pour chauffer la batterie, ledit transfert thermique peut être réalisé par l'intermédiaire de la machine thermodynamique réversible utilisée comme une pompe à chaleur dont les condenseur et évaporateur sont constitués respectivement par les premier et deuxième échangeurs de ladite machine.

Pour refroidir la batterie, la machine thermodynamique réversible peut être utilisée comme une climatisation dont les évaporateur et condenseur sont constitués respectivement par les premier et deuxième échangeurs de ladite machine.

Selon l'invention, le système permet de réguler la température de la batterie d'alimentation d'un véhicule à traction électrique. Il comporte des moyens de couplage thermique entre ladite batterie et des composants électriques du reste de la chaîne de traction électrique du véhicule.

Le système peut comprendre un circuit de thermorégulation dans lequel circule du fluide caloporteur, ledit circuit étant agencé de sorte à contrôler la température à la fois de ladite batterie et desdits composants électriques par échange thermique avec le fluide caloporteur.

Le circuit peut comprendre des moyens pour moduler la température du fluide caloporteur par l'intermédiaire d'au moins un échangeur pour réaliser un échange thermique avec de l'air extérieur au véhicule.

Le circuit peut comprendre une branche principale alimentant en fluide caloporteur lesdits composants électriques depuis une sortie dudit au moins un échangeur, et une branche secondaire alimentant en fluide caloporteur la batterie depuis une autre sortie dudit au moins un échangeur, ladite branche secondaire se raccordant à ladite branche principale en un point de connexion disposé entre la batterie et lesdits composants électriques.

Un circuit de thermorégulation peut comporter un unique échangeur équipé de première et deuxième sorties pour alimenter respectivement en fluide caloporteur des branches principale et secondaire, ledit échangeur étant agencé de sorte qu'une fraction de fluide caloporteur transférée à la batterie par la branche secondaire subisse un échange thermique supérieur à celui que subit une fraction restante de fluide caloporteur transférée directement auxdits composants électriques par l'intermédiaire de la branche principale.

Un circuit de thermorégulation peut comporter des premier et deuxième échangeurs en série dans le sens de circulation d'un fluide caloporteur, reliés par une branche de raccordement, la branche principale se raccordant à ladite branche de raccordement.

Le circuit de thermorégulation peut comprendre des première et deuxième boucles séparées dans lesquelles circulent respectivement un premier fluide caloporteur en échange thermique avec la batterie et un deuxième fluide caloporteur en échange thermique avec lesdits composants électriques, et les moyens de couplage thermique peuvent permettre de transférer de la chaleur d'une boucle à l'autre.

Les moyens de couplage thermique peuvent comprendre une machine thermodynamique réversible incluant des premier et deuxième échangeurs respectivement couplés thermiquement aux premier et deuxième fluides caloporteurs.

La deuxième boucle peut comprendre au moins un échangeur pour réaliser un échange thermique avec de l'air extérieur au véhicule.

La première boucle peut comporter un dispositif de chauffage du premier fluide caloporteur.

Selon l'invention, un véhicule à traction électrique, notamment de type automobile, est équipé d'un système de régulation défini précédemment.

Enfin, dans un troisième aspect, l'invention concerne un véhicule à traction électrique, notamment de type automobile, équipé d'un tel système de régulation.

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2 représentent respectivement des premier et deuxième modes de réalisation d'un système de régulation selon l'invention,
- la figure 3 illustre le premier mode de réalisation du système dans des conditions de refroidissement de la batterie sans utilisation de la machine thermodynamique réversible, que la batterie soit en situation de décharge ou de charge,
- la figure 4 illustre le premier mode de réalisation du système dans des conditions de refroidissement de la batterie avec utilisation de la machine thermodynamique réversible, que la batterie soit en situation de décharge ou de charge,
- les figures 5 et 6 illustrent le premier mode de réalisation du système dans des conditions de chauffage de la batterie avec utilisation de la machine thermodynamique réversible, que la batterie soit en situation de décharge ou de charge.

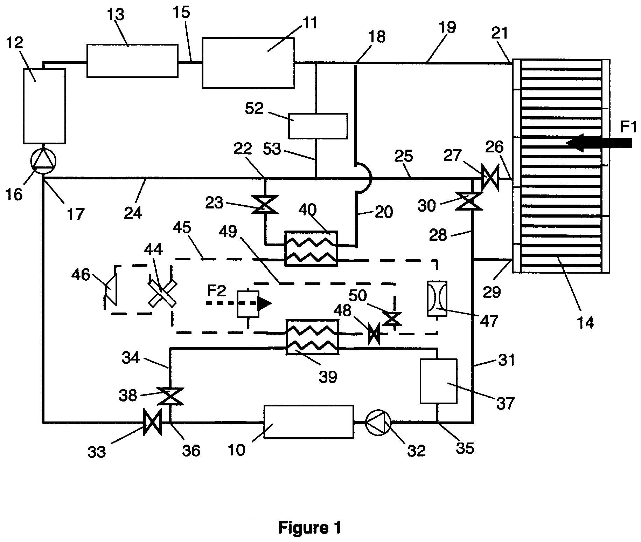

En référence aux figures 1 à 6, l'invention concerne d'abord un système de régulation de la température de la batterie d'alimentation 10 d'un véhicule à traction électrique. Ce système comporte des moyens pour réaliser un couplage thermique entre une batterie 10 et des composants électriques du reste de la chaîne de traction électrique du véhicule.

En effet, en dehors de la batterie d'alimentation 10, la chaîne de traction électrique comporte également un moteur électrique 11 et son électronique de puissance, laquelle comprend par exemple un chargeur de la batterie 12 et un onduleur 13 pour transformer le courant continu délivré par la batterie 10 en un courant alternatif alimentant le moteur électrique 11. Pour un fonctionnement optimal, ces composants électriques 11 à 13 du reste de la chaîne de traction électrique doivent être régulés thermiquement. Le système de régulation a pour vocation de réguler thermiquement au moins l'un des composants électriques 11 à 13, par exemple les trois à la fois de la manière qui sera décrite ci-dessous. Le moteur électrique 11 est couplé aux roues du véhicule pour assurer ou participer à son déplacement.

Selon une caractéristique de l'invention, le système de régulation comprend un circuit de thermorégulation dans lequel circule du fluide caloporteur. Ce circuit est agencé de sorte à contrôler la température à la fois de la batterie 10 et des composants électriques 11 à 13 régulés thermiquement. Ce contrôle en température se pratique par échange thermique de ces éléments 10 à 13 avec le fluide caloporteur qui peut être de tout type adapté, comme par exemple un liquide tel que de l'eau ou de l'huile. Le type de fluide pourra être choisi en fonction des caractéristiques recherchées, comme par exemple la température d'ébullition du liquide utilisé, son isolation électrique, ...

Par une gestion contrôlée du couplage thermique entre la batterie 10 et les composants électriques 11 à 13 régulés thermiquement par le circuit de thermorégulation, la température de régulation de la batterie 10 et celle des composants électriques 11 à 13 du reste de la chaîne de traction peuvent être contrôlées séparément en fonction des besoins individuels en temps réel de ces éléments 10 à 13.

Notamment, le circuit peut comprendre des moyens pour maintenir à la fois la température de la batterie 10 à une première température dans une première plage de température, et la température desdits composants électriques 11 à 13 à une deuxième température dans une deuxième plage de température différente de la première plage. À titre d'exemple, le circuit peut être conçu de sorte à générer un fluide caloporteur à une première température pour réaliser un échange thermique avec la batterie, et à générer un fluide caloporteur à une deuxième température pour réaliser un échange thermique avec les composants électriques 11 à 13. Par exemple, cette première température peut être pilotée pour être comprise entre 10 et 40°C environ dans un mode de refroidissement de la batterie, et entre 40 et 70°C environ dans un mode de chauffage de la batterie.

Pour parvenir à ce résultat, le circuit peut comprendre des moyens pour moduler la température d'au moins une partie de son fluide caloporteur par l'intermédiaire d'au moins un échangeur 14 adapté pour réaliser un échange thermique avec de l'air extérieur au véhicule.

Un tel écart de température de régulation entre la batterie 10 et les composants électriques 11 à 13 du reste de la chaîne de traction peut de plus atteindre des valeurs relativement élevées (en fonction du mode recherché pour la batterie 10 entre le mode de chauffage et le mode de refroidissement) grâce à une conception idoine dudit au moins un échangeur 14 du circuit de thermorégulation.

Dans ce qui suit, le fluide caloporteur peut parcourir la batterie 10 ou les composants électriques 11 à 13 du reste de la chaîne de traction, ou bien ces éléments 10 à 13 peuvent être connectés thermiquement au circuit de thermorégulation, par exemple au moyen d'échangeurs de chaleur. Dans ce deuxième cas, on omettra d'indiquer la présence de tels échangeurs de chaleur et l'on parlera directement de l'élément thermiquement connecté au circuit de thermorégulation.

La figure 1 illustre un premier mode de réalisation d'un tel système de régulation.

Le chargeur 12, l'onduleur 13 et le moteur électrique 11 sont connectés et régulés thermiquement par une première conduite 15 du circuit de thermorégulation. La première conduite comprend en outre une première pompe électrique 16 servant à la circulation de fluide caloporteur, et relie par ses extrémités des premier et deuxième points de connexion du circuit respectivement repérés 17 et 18. La première pompe électrique 16, le chargeur 12, l'onduleur 13 et le moteur électrique sont montés en série, par exemple en série dans cet ordre suivant le sens de circulation du fluide caloporteur imposé par la première pompe électrique 16 dirigé du premier point de connexion 17 vers le deuxième point de connexion 18.

Sur le deuxième point de connexion 18 viennent se raccorder des deuxième et troisième conduites 19, 20 du circuit. La deuxième conduite 19 vient alimenter en fluide caloporteur par son extrémité opposée une entrée 21 d'un échangeur thermique 14 de type fluide/air qui est traversé par du fluide caloporteur et qui est propre à être balayé par un flux d'air F1 provenant de l'extérieur du véhicule. Notamment, ledit au moins un échangeur 14 peut être disposé dans une entrée d'air agencée en face avant du véhicule. D'autre part, il est possible de prévoir un ventilateur (non représenté) pour augmenter le flux d'air balayant l'échangeur 14.

La troisième conduite 20 quant à elle sert à raccorder le deuxième point de connexion 18 à un troisième point de connexion 22 du circuit, et est équipée d'une première vanne d'arrêt 23 autorisant ou bloquant la circulation de fluide caloporteur dans la troisième conduite 20.

Les premier et troisième points de connexion 17 et 22 sont reliés entre eux par une quatrième conduite du circuit repérée 24. D'autre part, une cinquième conduite 25 du circuit relie une première sortie 26 de l'échangeur 14 au troisième point de connexion 22 et est équipée d'une deuxième vanne d'arrêt 27 autorisant ou bloquant la circulation de fluide caloporteur dans la cinquième conduite 25.

Le circuit de thermorégulation comprend en outre une sixième conduite 28 raccordant une deuxième sortie 29 de l'échangeur 14 à un point intermédiaire de la cinquième conduite 25 disposé en aval de la deuxième vanne d'arrêt 27. La sixième conduite 28 est équipée d'une troisième vanne d'arrêt 30 autorisant ou bloquant la circulation de fluide caloporteur dans la sixième conduite 28.

En un point intermédiaire de la sixième conduite 28 disposé entre la troisième vanne d'arrêt 30 et la deuxième sortie 29 vient se raccorder une septième conduite 31 du circuit qui se raccorde à son extrémité opposée au premier point de connexion 17. La septième conduite 31 sert à la circulation de fluide caloporteur pour assurer la régulation thermique de la batterie 10 qui y est thermiquement connectée et comprend en outre une deuxième pompe électrique 32 servant à la circulation de ce fluide caloporteur. En aval de la batterie 10, la septième conduite 31 porte également une quatrième vanne d'arrêt 33 autorisant ou bloquant la circulation de fluide caloporteur dans la septième conduite 31. La deuxième pompe électrique 32, la batterie 10 et la quatrième vanne d'arrêt 33 sont montés en série, par exemple en série dans cet ordre suivant le sens de circulation du fluide caloporteur imposé par la deuxième pompe électrique 32 en direction du premier point de connexion 17.

Le circuit de thermorégulation comporte en outre une huitième conduite 34 placée en dérivation de la deuxième pompe électrique 32 et de la batterie 10. Par conséquent, la huitième conduite 34 vient se raccorder à la septième conduite 31, par ses extrémités, au niveau de quatrième et cinquième points de connexion 35 et 36. Le quatrième point de connexion 35 est disposé entre la deuxième pompe électrique 32 et le point de raccordement de la septième conduite 31 sur la sixième conduite 28. Le cinquième point de connexion 36 est situé entre la batterie 10 et la quatrième vanne d'arrêt 33.

La huitième conduite 34 est équipée en série d'un dispositif de chauffage 37 permettant d'apporter, si nécessaire, des calories au fluide caloporteur qui circule dans la huitième conduite 34, et une cinquième vanne d'arrêt 38 autorisant ou bloquant la circulation de fluide caloporteur dans la huitième conduite 34. Le système est par exemple du type électrique, notamment du type à résistance.

L'ensemble des conduites décrites précédemment sont destinées à assurer une circulation de fluide caloporteur. D'autre part, la première conduite 15 et la septième conduite 31 sont connectées thermiquement respectivement avec les composants électriques 11 à 13 et avec la batterie 10 pour réaliser un échange thermique entre le fluide et ces éléments 10 à 13.

Il résulte de ce qui précède que le circuit de thermorégulation peut être considéré comme comprenant une branche principale alimentant en fluide caloporteur les composants électriques 11 à 13 depuis une sortie 26 dudit au moins un échangeur 14, et une branche secondaire alimentant en fluide caloporteur la batterie 10 depuis une autre sortie 29 dudit au moins un échangeur 14. Cette branche secondaire se raccorde à la branche principale au premier point de connexion 17 disposé entre la batterie 10 et les composants électriques 11 à 13.

Concrètement, la branche principale est constituée par les quatrième et cinquième conduites 24, 25 tandis que la branche secondaire est constituée par la partie de la septième conduite 31 située entre la batterie 10 et la sixième conduite 28 et par la partie de la sixième conduite 28 disposée entre son point de raccordement à la septième conduite 31 et la sortie 29 de l'échangeur 14.

Dans le mode de réalisation du système de la figure 1, le circuit comporte un unique échangeur 14 équipé de première et deuxième sorties 26 et 29 pour alimenter respectivement en fluide caloporteur les branches principale et secondaire. L'échangeur 14 est agencé de sorte que la fraction de fluide caloporteur transférée à la batterie 10 par la branche secondaire subit un échange thermique (avec l'air extérieur au véhicule) supérieur à celui que subit la fraction restante de fluide caloporteur transférée directement aux composants électriques 11 à 13 par l'intermédiaire de la branche principale. En effet, la fraction de fluide caloporteur provenant de la deuxième conduite 19 et sortant par la deuxième sortie 29 de l'échangeur 14 reste à l'intérieur de l'échangeur 14 pendant un temps supérieur au temps de parcours de la fraction provenant de la deuxième conduite 19 mais sortant par la première sortie 26. Il résulte de cette différence temporelle une différence correspondante d'échange thermique subi par ces fractions.

Il résulte également de ce qui précède que le circuit de thermorégulation peut être considéré comme comprenant des première et deuxième boucles séparées dans lesquelles circulent respectivement un premier fluide caloporteur en échange thermique avec la batterie 10 et un deuxième fluide caloporteur en échange thermique avec lesdits composants électriques 11 à 13.

Concrètement, la première boucle est constituée par la partie de la septième conduite 31 enchâssée par la huitième conduite 34, et par la huitième conduite 34 elle-même. Le fluide caloporteur circulant dans ces conduites constitue un premier fluide caloporteur mis en circulation par la deuxième pompe électrique 32. Le dispositif de chauffage 37 peut être considéré comme équipant la première boucle.

La deuxième boucle quant à elle est formée concrètement par la combinaison de la première conduite 15, de la troisième conduite 20 et de la quatrième conduite 24. Le fluide caloporteur circulant dans ces conduites constitue un deuxième fluide caloporteur mis en circulation par la première pompe électrique 16. Par l'intermédiaire des deuxième, cinquième et sixième conduites, la deuxième boucle comprend ledit au moins un échangeur 14 pour éventuellement réaliser un échange thermique avec de l'air extérieur au véhicule.

Des moyens de transfert thermique d'une boucle à l'autre entre lesdits premier et deuxième fluides caloporteurs peuvent être prévus, comme représentés sur la figure 1. Ces moyens de transfert thermique d'une boucle à l'autre peuvent par exemple comprendre une machine thermodynamique réversible incluant un premier et un deuxième échangeurs 39, 40 respectivement couplés thermiquement aux premier et deuxième fluides caloporteurs. Plus précisément, le premier échangeur 39 de la machine est placé le long de la huitième conduite 34, entre le dispositif de chauffage 37 et la cinquième vanne d'arrêt 38. Le deuxième échangeur 40 de la machine est situé le long de la troisième conduite 20, entre le deuxième point de connexion 18 et la première vanne d'arrêt 23. Cette machine sera décrite plus en détail.

Le circuit de thermorégulation peut prévoir que les premier et deuxième fluides caloporteurs se mélangent éventuellement. En effet, les deuxième, cinquième, sixième et septième conduites constituent en pratique des moyens de mise en communication éventuelle des première et deuxième boucles. Cette mise en communication se commande ou s'interrompt respectivement par l'ouverture ou la fermeture des vannes 33 et/ou 30 et/ou 27.

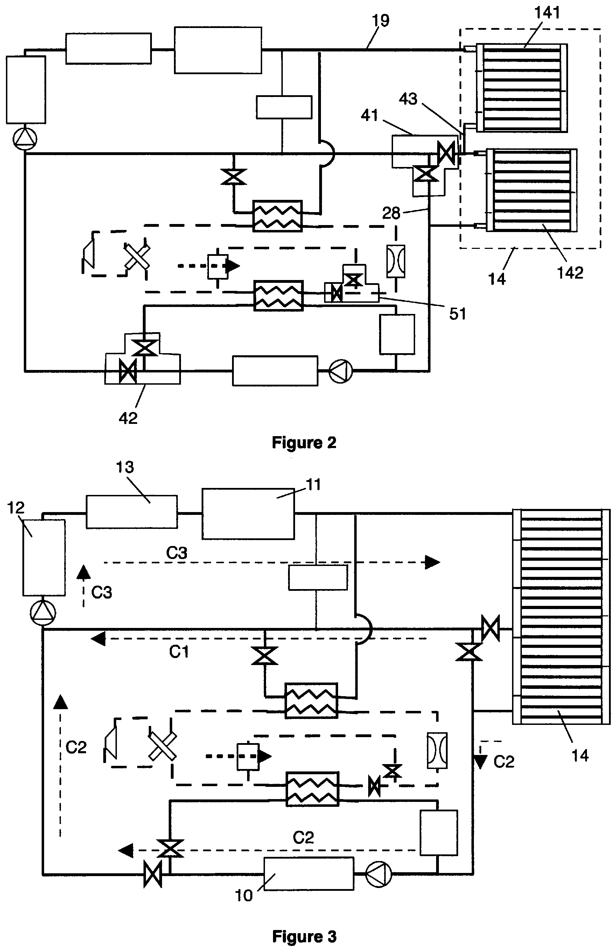

La figure 2 illustre un deuxième mode de réalisation d'un tel système de régulation. Le deuxième mode de réalisation se distingue du premier mode de la figure 1 par le type de vannes d'arrêt équipant le circuit de thermorégulation pour la commande en débit du fluide caloporteur dans ses conduites, et par la conception dudit au moins un échangeur 14. La figure 2 illustre que les deuxième et troisième vannes d'arrêt 27, 30 peuvent être remplacées par une première vanne de type à trois voies 41. Les quatrième et cinquième vannes d'arrêt 33, 38 peuvent être remplacées par une deuxième vanne de type à trois voies 42.

D'autre part sur la figure 2, le circuit de thermorégulation présente au moins deux échangeurs 141 et 142 en série, reliés entre eux par une neuvième conduite 43 formant une branche de raccordement entre les échangeurs 141 et 142. La neuvième conduite 43 assure une circulation de fluide caloporteur depuis la sortie de l'échangeur 141 dont l'entrée est raccordée à la deuxième conduite 19, en direction de l'entrée de l'autre échangeur 142 dont la sortie est connectée à la sixième conduite 28.

Ainsi dans le mode de réalisation de la figure 2, le circuit de thermorégulation comporte des premier et deuxième échangeurs 141, 142 en série dans le sens de circulation du fluide caloporteur, reliés par une branche de raccordement 43, la branche principale se raccordant à cette branche de raccordement. Chacun des échangeurs 141 et 142 est individuellement capable de réaliser un échange thermique entre le fluide caloporteur le parcourant et le flux d'air F1 extérieur au véhicule. Par exemple, les échangeurs 141, 142 peuvent être placés l'un derrière l'autre dans le sens du flux d'air F1.

La présence avantageuse de la machine thermodynamique réversible permet un apport de calories à la batterie 10 dans un mode du système recherchant un chauffage de la batterie 10 dans le cas où la machine est exploitée en tant que pompe à chaleur, ou bien une évacuation de calories depuis la batterie 10 dans un mode du système visant à un refroidissement de la batterie 10 dans le cas où la machine est utilisée en tant que climatisation. La commutation de la machine thermodynamique d'un fonctionnement à l'autre peut se contrôler par action sur une vanne d'inversion 44 prévue dans le circuit fermé 45 du fluide frigorigène de cette machine. Les premier et deuxième échangeurs 39, 40 de la machine thermodynamique réversible sont montés le long de ce circuit fermé 45, lequel comprend en outre un compresseur 46 sur une première branche de circuit 45 raccordant les échangeurs 39, 40, et un détendeur 47 sur une deuxième branche de circuit 45 raccordant les échangeurs 39, 40. Une telle machine thermodynamique réversible est bien connue en soi pour former sélectivement une climatisation dans un premier sens d'écoulement S1 du fluide frigorigène ou une pompe à chaleur dans un deuxième sens d'écoulement S2 du fluide frigorigène, le passage de l'un à l'autre étant réalisé par action sur la vanne d'inversion 44.

La circulation du fluide frigorigène peut être autorisée ou interrompue par une première vanne d'obturation 48 montée sur le circuit 45 entre le premier échangeur 39 et le détendeur 47. Le circuit fermé 45 peut en outre comporter une branche de dérivation 49 en parallèle du premier échangeur 39 et de la première vanne d'obturation 48, conçue de sorte à pouvoir également participer à la régulation de la température à l'intérieur de l'habitacle par l'intermédiaire d'un flux d'air F2. La branche de dérivation 49 peut être équipée d'une deuxième vanne d'obturation 50, pour interrompre si nécessaire l'interaction entre la régulation de la température de la batterie 10 et la régulation de la température à l'intérieur de l'habitacle. La figure 2 illustre que les première et deuxième vannes d'obturation 48, 50 peuvent être remplacées par une vanne de type à trois voies 51.

Ainsi, la machine thermodynamique réversible peut constituer une pompe à chaleur dont les condenseur et évaporateur sont formés respectivement par les premier et deuxième échangeurs 39, 40 de cette machine. À l'inverse, la machine thermodynamique réversible peut constituer une climatisation dont les évaporateur et condenseur sont formés respectivement par les premier et deuxième échangeurs 39, 40 de cette machine.

Il convient en outre de préciser que le circuit de thermorégulation peut comporter un vase d'expansion 52, notamment monté sur une dixième conduite 53 reliant la première conduite 15 en un point en aval du moteur électrique 11 et la cinquième conduite 25 en un point situé entre la deuxième vanne d'arrêt 27 et le troisième point de connexion 22. Le vase d'expansion 52 est destiné à collecter le fluide caloporteur en surplus dans le circuit de thermorégulation.

Différents modes de fonctionnement du système de régulation vont être décrits ci-dessous :
Dans un premier mode de refroidissement ou de chauffage de la batterie en référence à la figure 3, le couplage thermique entre la batterie et les composants électriques se pratique directement par le fait que le fluide caloporteur en échange thermique avec la batterie 10 subit également un échange thermique avec les composants électriques 11 à 13. Cela consiste en pratique en la réalisation d'un mélange entre la fraction de fluide caloporteur en échange thermique avec la batterie 10 et la fraction restante qui elle n'est en échange thermique qu'avec lesdits composants 11 à 13. Ce mélange se pratiquant en amont des composants électriques 11 à 13, il en résulte que la fraction de fluide caloporteur qui subit un échange avec la batterie 10 subit également un échange thermique avec les composants électriques 11 à 13 ensuite. Dans ce cas, le moyen de couplage thermique consiste en le fluide caloporteur lui-même.

Plus précisément, seules les deuxième et quatrième vannes d'arrêt 27, 33 sont ouvertes. Une fraction du fluide caloporteur emprunte la branche principale en sortie d'échange thermique avec l'air extérieur par l'intermédiaire de la cinquième conduite 25, tandis que la fraction restante emprunte la branche secondaire en sortie d'échange thermique avec l'air extérieur par l'intermédiaire de la septième conduite 31. Les première et deuxième pompes électriques 16, 32 sont en fonctionnement pour faire circuler l'ensemble du fluide caloporteur dans les branches principale et secondaire.

La flèche C1 symbolise la circulation d'une fraction contrôlée (en quantité et/ou en température) de fluide caloporteur le long de la branche principale. Les trois flèches C2 symbolisent la circulation d'une fraction contrôlée (en quantité et/ou en température) de fluide caloporteur le long de la branche secondaire. Enfin les deux flèches C3 ont pour but d'illustrer la circulation du fluide caloporteur entre le point de mélange des fractions de fluide provenant des branches principale et secondaire et ledit au moins un échangeur 14.

La conception de l'unique échangeur 14 sur la figure 1 et la conception des deux échangeurs 141, 142 sur la figure 2 sont telles qu'ils permettent de constituer des moyens pour faire subir à la fraction de fluide caloporteur qui est dirigée vers la batterie 10 un échange thermique supérieur à la fraction restante dirigée directement vers les composants électriques 11 à 13, la différence entre ces échanges étant ajustable de sorte à pouvoir piloter individuellement la température de chacune de ces fractions de fluide caloporteur. Par ce contrôle, il est finalement possible de moduler la température de la batterie 10 séparément de la température des composants électriques 11 à 13.

La troisième vanne d'arrêt 30 peut toutefois être ouverte en cas de sous-exploitation thermique de l'une des fractions de fluide caloporteur.

Ainsi, dans ce premier mode de refroidissement ou de chauffage, on comprend qu'à la suite de l'échange thermique du fluide caloporteur avec de l'air extérieur au véhicule, seule une fraction de fluide caloporteur est transférée jusqu'à la batterie 10 pour sa régulation en température, la fraction restante de fluide caloporteur étant transférée directement aux composants électriques 11 à 13 pour leur régulation en température. L'échange thermique que subit en amont de la batterie 10 la fraction de fluide caloporteur transférée à la batterie 10 peut avantageusement être supérieur à celui que subit la fraction restante de fluide caloporteur transférée directement auxdits composants électriques 11 à 13 en amont desdits composants électriques 11 à 13. La fraction de fluide caloporteur transférée à la batterie 10 se mélange, après échange thermique avec celle-ci, avec la fraction transférée directement aux composants électriques 11 à 13. Ce mélange est réalisé en amont des composants électriques 11 à 13 suivant le sens de circulation du fluide caloporteur dans le circuit de thermorégulation.

Toutefois, une autre solution envisageable dans le cas où l'ensemble du fluide caloporteur subirait un échange thermique uniforme avec de l'air extérieur au véhicule, consisterait à contrôler séparément la valeur de ces fractions (par exemple en adaptant le débit de circulation dans les branches principale et secondaire) en fonction des échanges thermiques recherchés avec le fluide caloporteur respectivement au niveau de la batterie 10 et au niveau des autres composants électriques 11 à 13. Dès lors, on peut utiliser un système de régulation basé sur celui de la figure 1 mais dans lequel la première sortie 26 et la vanne 27 sont supprimées.

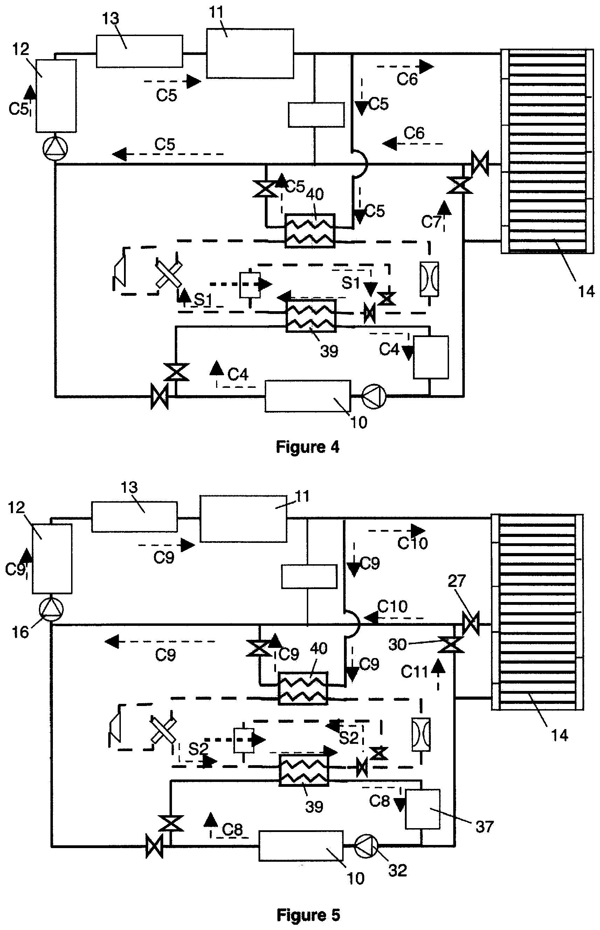

Dans un deuxième mode de refroidissement de la batterie en référence à la figure 4, le couplage thermique entre la batterie et les composants électriques se pratique cette fois indirectement par un transfert thermique de la première boucle vers la deuxième boucle. Ce transfert thermique est réalisé par exemple par l'intermédiaire de la machine thermodynamique réversible alors exploitée en tant que climatisation. Dans ce cas, le moyen de couplage thermique comprend une machine thermodynamique réversible.

Plus précisément, seules les première, troisième et cinquième vannes d'arrêt 23, 30, 38 sont ouvertes. Un premier fluide caloporteur circule dans la première boucle sous l'action de la deuxième pompe électrique 32. Un deuxième fluide caloporteur circule dans la deuxième boucle sous l'action de la première pompe électrique 16. Il n'intervient pas de mélange entre les premier et deuxième fluides caloporteurs. Le transfert thermique de la première boucle vers la deuxième boucle est réalisé par la machine thermodynamique réversible agissant en tant que climatisation. Le premier échangeur 39 de la machine agit comme évaporateur. Le deuxième échangeur 40 constitue quant à lui son condenseur. Le sens de circulation du fluide frigorigène est symbolisé par les flèches S1 disposées le long du circuit fermé 45. Les calories extraites au premier fluide caloporteur au niveau du premier échangeur 39 sont transférées au deuxième fluide caloporteur par l'intermédiaire du deuxième échangeur 40. Pour cela, le fluide frigorigène subit un cycle thermodynamique classique de climatisation à l'intérieur de la machine.

Les flèches C4 illustrent la circulation du premier fluide caloporteur dans la première boucle. Les flèches C5 schématisent quant à elles la circulation du deuxième fluide caloporteur dans la deuxième boucle.

Ainsi, pour refroidir la batterie 10, la machine thermodynamique réversible est utilisée comme une climatisation dont les évaporateur et condenseur sont constitués respectivement par les premier et deuxième échangeurs 39, 40 de cette machine.

Dans le deuxième mode de refroidissement, les deuxième et troisième vannes d'arrêt 27, 30 peuvent occuper une position de fermeture de sorte que la totalité du deuxième fluide caloporteur en échange thermique avec les composants électriques 11 à 13 parcourt le deuxième échangeur 40 de la machine thermodynamique réversible. Toutefois la deuxième vanne d'arrêt 27 et/ou la troisième vanne d'arrêt 30 peut (peuvent) occuper une position d'ouverture afin qu'une fraction du deuxième fluide caloporteur parcourt au moins une partie dudit au moins un échangeur 14, permettant une meilleure évacuation des calories par un échange thermique avec le flux d'air F1 extérieur au véhicule. Cette partie dudit au moins un échangeur 14 est considérée alors comme appartenant à la deuxième boucle du circuit de thermorégulation.

Les flèches C6 illustrent la possibilité d'une circulation d'au moins une partie du deuxième fluide caloporteur à l'intérieur d'au moins un échangeur thermique 14 avec de l'air extérieur. La flèche C7 schématise la circulation possible le long de la sixième conduite 28 en cas d'ouverture de la troisième vanne d'arrêt 30.

De manière non représentée, un troisième mode de refroidissement éventuel consiste à adopter les premier et deuxième modes de refroidissement simultanément. Le couplage thermique entre la batterie 10 et les composants électriques 11 à 13 se pratique alors par une combinaison des effets conférés par chacun des deux premiers modes. Dans ce cas, un mélange intervient entre les premier et deuxième fluides caloporteurs après ouverture des vannes d'arrêt 33, 27 et éventuellement 30.

Tous ces modes de refroidissement de la batterie 10 peuvent être exploités que celle-ci soit en situation de charge (la batterie reçoit de l'énergie électrique) ou de décharge (la batterie transmet de l'énergie électrique).

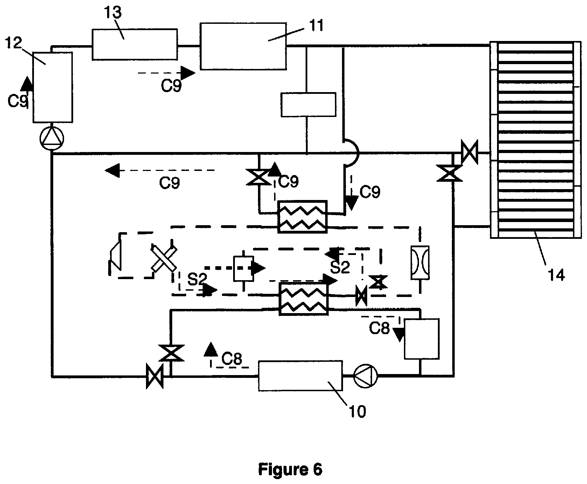

Les figures 5 et 6 représentent deux modes possibles de chauffage de la batterie 10. Le transfert thermique de la deuxième boucle vers la première boucle est réalisé par la machine thermodynamique réversible qui est alors utilisée en tant que pompe à chaleur. Les calories apportées par les composants électriques 11 à 13 au deuxième fluide caloporteur sont donc au moins en partie transmises au premier fluide caloporteur circulant dans la première boucle, par l'intermédiaire de cette pompe à chaleur. Pour augmenter les calories transmissibles au premier fluide caloporteur, il est également possible (en référence à la figure 5) de faire circuler une partie du deuxième fluide caloporteur dans au moins un échangeur 14 de type fluide/air agencé de sorte à permettre un échange thermique de la quantité de deuxième fluide caloporteur le traversant avec de l'air extérieur au véhicule. Cet air extérieur, par l'intermédiaire de cet échangeur 14, peut ainsi transmettre des calories supplémentaires au deuxième fluide caloporteur, en plus de celles déjà transmises sous l'effet de l'échange thermique avec les composants électriques 11 à 13. Enfin, pour augmenter les calories transmises à la batterie 10, il est possible d'utiliser le dispositif de chauffage 37 disposé dans la première boucle. Par son fonctionnement, ce dispositif de chauffage 37 apporte directement des calories au premier fluide caloporteur, sans utilisation de la pompe à chaleur. Ces calories apportées par le dispositif de chauffage 37 sont directement transmises à la batterie 10 par l'intermédiaire du premier fluide caloporteur. La quantité totale de calories transmises au premier fluide caloporteur par la pompe à chaleur et/ou par le dispositif de chauffage 37 est transmise à la batterie 10, sous réserve des pertes thermiques lors de l'écoulement du premier fluide caloporteur et lors des échanges thermiques entre la batterie 10 et le premier fluide caloporteur. Toutefois, la figure 6 illustre que la circulation d'au moins une partie du deuxième fluide caloporteur dans au moins une partie dudit au moins un échangeur 14 reste facultative, par fermeture de la deuxième vanne d'arrêt 27 et/ou de la troisième vanne d'arrêt 30.

Plus précisément, il est possible de prévoir que seules les première et cinquième vannes d'arrêt 23, 38 soient ouvertes dans le deuxième mode. Un premier fluide caloporteur circule dans la première boucle sous l'action de la deuxième pompe électrique 32. Un deuxième fluide caloporteur circule dans la deuxième boucle sous l'action de la première pompe électrique 16. Il n'intervient pas de mélange entre les premier et deuxième fluides caloporteurs. Le transfert thermique de la deuxième boucle vers la première boucle est réalisé par la machine thermodynamique réversible agissant en tant que pompe à chaleur. Le premier échangeur 39 de la machine agit comme condenseur. Le deuxième échangeur 40 forme quant à lui son évaporateur. Le sens de circulation du fluide frigorigène est symbolisé par les flèches S2 disposées le long du circuit fermé 45. Les calories extraites au deuxième fluide caloporteur au niveau du deuxième échangeur 40 sont transférées au premier fluide caloporteur par l'intermédiaire du premier échangeur 39. Pour cela, le fluide frigorigène subit un cycle thermodynamique classique de pompe à chaleur à l'intérieur de la machine. Il s'agit d'une inversion du cycle frigorifique par rapport au fonctionnement décrit précédemment dans le deuxième mode de refroidissement où la machine thermodynamique réversible était exploitée en tant que climatisation.

Les flèches C8 illustrent la circulation du premier fluide caloporteur dans la première boucle. Les flèches C9 schématisent quant à elles la circulation du deuxième fluide caloporteur dans la deuxième boucle.

Les flèches C10 illustrent la possibilité d'une circulation d'au moins une partie du deuxième fluide caloporteur à l'intérieur d'au moins un échangeur thermique 14 avec de l'air extérieur, par ouverture de la deuxième vanne d'arrêt 27. La flèche C11 quant à elle schématise la circulation possible le long de la sixième conduite 28 en cas d'ouverture de la troisième vanne d'arrêt 30. Par contre, la figure 6 ne comporte pas de flèches C10 et C11 en raison de l'absence de circulation de deuxième fluide caloporteur à travers un échangeur 14.

De manière non représentée, un autre mode de chauffage éventuel consiste à utiliser deux modes de chauffage simultanément. Le couplage thermique entre la batterie 10 et les composants électriques 11 à 13 se pratique alors par une combinaison des effets conférés par chacun des deux modes. Dans ce cas, un mélange intervient entre les premier et deuxième fluides caloporteurs après ouverture des vannes d'arrêt 33, 27 et éventuellement 30 et un transfert thermique est réalisé par la machine thermodynamique réversible.

Tous ces modes de chauffage de la batterie 10 peuvent être exploités que celle-ci soit en situation de charge (la batterie reçoit de l'énergie électrique) ou de décharge (la batterie transmet de l'énergie électrique).

Finalement, pour chauffer la batterie, le transfert thermique de la deuxième boucle vers la première boucle peut n'être uniquement réalisé que par l'intermédiaire de la machine thermodynamique réversible utilisée comme une pompe à chaleur dont les condenseur et évaporateur sont constitués respectivement par les premier et deuxième échangeurs de cette machine. Le deuxième fluide caloporteur peut subir une modulation de sa température par l'intermédiaire d'au moins un échangeur 14 pour réaliser un échange thermique avec de l'air extérieur (flux d'air F1) au véhicule. Le premier fluide caloporteur quant à lui peut subir une modulation de sa température grâce au dispositif de chauffage 37 inséré dans la première boucle.

Dans les modes qui correspondent aux figures 4 à 6, le couplage thermique entre la batterie 10 et les composants électriques 11 à 13 concernés par ce couplage peut ainsi comporter, de manière générale, l'utilisation d'un transfert thermique d'une boucle à l'autre du circuit de thermorégulation entre les premier et deuxième fluides caloporteurs. Ce transfert thermique peut rester ajustable de sorte à pouvoir contrôler individuellement la température des premier et deuxième fluides caloporteurs. Par ce contrôle, il est alors possible de moduler la température de la batterie 10 séparément de la température des composants électriques 11 à 13. Pour rendre ajustable le transfert thermique inter-boucles, celui-ci peut comprendre l'utilisation d'une machine thermodynamique réversible incluant les premier et deuxième échangeurs 39, 40 respectivement couplés thermiquement aux premier et deuxième fluides caloporteurs.

Toutefois, le transfert thermique d'une boucle à l'autre du circuit nécessaire pour parvenir au couplage thermique entre la batterie 10 et les composants électriques 11 à 13 peut être réalisé par tout autre moyen idoine que la machine thermodynamique réversible. À cet effet, il est possible d'utiliser tout échangeur thermique capable de transférer des calories d'une boucle à l'autre du circuit.

Dans les modes de chauffage de la batterie 10, le couplage thermique entre la batterie 10 et les composants électriques 11 à 13 concernés par ce couplage peut consister en un transfert thermique entre les fluides caloporteurs en échange thermique respectivement avec la batterie 10 et ces composants 11 à 13, cette opération étant combinable avec, ou substituable par, un mélange de ces deux fluides caloporteurs. De même dans les modes de refroidissement de la batterie 10, le couplage thermique entre la batterie 10 et les composants électriques 11 à 13 concernés par ce couplage peut consister en un transfert thermique entre les fluides caloporteurs en échange thermique respectivement avec la batterie 10 et ces composants 11 à 13, cette opération étant combinable avec, ou substituable par, un mélange de ces deux fluides caloporteurs.

De ce qui précède, on comprend que le procédé de régulation comprend finalement une étape de couplage thermique de la batterie 10 et de composants électriques 11 à 13 du reste de la chaîne de traction électrique du véhicule. Ce procédé peut comprendre l'utilisation d'un circuit de thermorégulation dans lequel circule du fluide caloporteur, ce circuit étant agencé de sorte à contrôler la température à la fois de la batterie 10 et des composants électriques 11 à 13 par échange thermique avec le fluide caloporteur.

L'invention porte également sur le véhicule en tant que tel, dès lors qu'il comporte un système de régulation décrit précédemment.

Pour une recherche de performances élevées, chacun des échangeurs 14, 141, 142 du circuit de thermorégulation utilisé peut occuper sensiblement la totalité d'une entrée d'air agencée sur la face avant du véhicule pour l'admission d'air extérieur au véhicule. Ainsi, l'entrée d'air aménagée sur la face avant du véhicule peut être dépourvue de tout autre organe d'échange thermique autre que ledit au moins échangeur 14, 141, 142 mis en oeuvre dans le circuit, améliorant la perméabilité à l'air et les performances générales de la régulation.

L'invention, qui s'accompagne d'une consommation énergétique avantageusement faible résultant d'une conception simple de la régulation thermique, d'un poids maîtrisé et de la suppression possible des organes à fortes consommations (compresseur de climatisation utilisé dans l'art antérieur), autorise que les transferts thermiques avec l'extérieur du véhicule ne puissent être supportés que par l'aménagement d'au moins un échangeur de type fluide/air. Avantageusement, la thermorégulation permet de surcroît de supprimer éventuellement la présence des condenseurs des systèmes de climatisation utilisés dans l'art antérieur au niveau de l'entrée d'air aménagée en face avant du véhicule, offrant ainsi la possibilité d'utiliser un échangeur fluide/air de grande efficacité et d'améliorer la perméabilité à l'air en face avant de véhicule, les performances générales étant concomitamment accrues.

Enfin, l'invention pourra trouver application pour la régulation thermique d'une batterie d'alimentation utilisée dans un véhicule hybride faisant appel à une source d'énergie distincte et complémentaire de l'énergie électrique apportée par la chaîne de traction électrique de ce véhicule.

La synergie qui résulte des effets de la régulation desdits composants électriques et de ceux de la régulation de la batterie engendre une augmentation des performances globales de la régulation thermique par rapport aux solutions de l'art antérieur mettant en oeuvre une régulation dissociée entre la température de la batterie et celle des composants électriques du reste de la chaîne de traction. Par exemple en mode de chauffage de la batterie, les calories transmises par les composants électriques du reste de la chaîne de traction participent directement au chauffage de la batterie par transfert thermique de ces calories vers la batterie.

## Revendications

1. Procédé de régulation de la température de la batterie d'alimentation (10) d'un véhicule à traction électrique comportant également un moteur électrique (11) et son électronique de puissance, laquelle comprenant par exemple un chargeur de la batterie (12) et un onduleur (13), comprenant une étape de couplage thermique de ladite batterie (10) et de composants électriques (11 à 13) du reste de la chaîne de traction électrique du véhicule, comprenant l'utilisation d'un circuit de thermorégulation dans lequel circule du fluide caloporteur, ledit circuit étant agencé de sorte à contrôler la température à la fois de ladite batterie (10) et desdits composants électriques (11 à 13) par échange thermique avec le fluide caloporteur, comprenant une modulation de la température du fluide caloporteur par l'intermédiaire d'au moins un échangeur (14, 141, 142) pour réaliser un échange thermique avec de l'air extérieur au véhicule et comprenant qu'à la suite de l'échange thermique de fluide caloporteur avec de l'air extérieur au véhicule, seule une fraction de fluide caloporteur est transférée jusqu'à la batterie (10) pour sa régulation en température, la fraction restante de fluide caloporteur étant transférée directement auxdits composants électriques (11 à 13) pour leur régulation en température, la fraction de fluide caloporteur transférée à la batterie (10) subissant un échange thermique supérieur à celui que subit la fraction restante de fluide caloporteur transférée directement auxdits composants électriques (11 à 13), ces échanges thermiques étant réalisés en amont respectivement de la batterie (10) et desdits composants électriques (11 à 13), le circuit de thermorégulation comprenant des première et deuxième boucles séparées dans lesquelles circulent respectivement un premier fluide caloporteur en échange thermique avec la batterie (10) et un deuxième fluide caloporteur en échange thermique avec lesdits composants électriques (11 à 13), l'étape de couplage thermique entre la batterie (10) et lesdits composants électriques (11 à 13) comprenant un transfert thermique d'une boucle à l'autre entre lesdits premier et deuxième fluides caloporteurs le procédé étant **caractérisé en ce que** ledit transfert thermique comprend l'utilisation d'une machine thermodynamique réversible incluant des premier et deuxième échangeurs (39, 40) respectivement couplés thermiquement aux premier et deuxième fluides caloporteurs pour réaliser un échange thermique.

2. Procédé selon la revendication précédente, **caractérisé en ce que** pour chauffer la batterie (10), ledit transfert thermique est réalisé par l'intermédiaire de la machine thermodynamique réversible utilisée comme une pompe à chaleur dont les condenseur et évaporateur sont constitués respectivement par les premier et deuxième échangeurs (39, 40) de ladite machine.

3. Procédé selon la revendication 3, **caractérisé en ce que** pour refroidir la batterie, la machine thermodynamique réversible est utilisée comme une climatisation dont les évaporateur et condenseur sont constitués respectivement par les premier et deuxième échangeurs (39, 40) de ladite machine.

4. Système de régulation de la température de la batterie d'alimentation (10) d'un véhicule à traction électrique comportant également un moteur électrique (11) et son électronique de puissance, laquelle comprenant par exemple un chargeur de la batterie (12) et un onduleur (13), comportant des moyens de couplage thermique entre ladite batterie (10) et des composants électriques (11 à 13) du reste de la chaîne de traction électrique du véhicule, comportantun circuit de thermorégulation dans lequel circule du fluide caloporteur, ledit circuit étant agencé de sorte à contrôler la température à la fois de ladite batterie (10) et desdits composants électriques (11 à 13) par échange thermique avec le fluide caloporteur, en ce que le circuit comprend des moyens pour moduler la température du fluide caloporteur par l'intermédiaire d'au moins un échangeur (14, 141, 142) pour réaliser un échange thermique avec de l'air extérieur au véhicule et en ce que le circuit comprend une branche principale alimentant en fluide caloporteur lesdits composants électriques (11 à 13) depuis une sortie (26) dudit au moins un échangeur (14, 141, 142), et une branche secondaire alimentant en fluide caloporteur la batterie (10) depuis une autre sortie (29) dudit au moins un échangeur (14, 141, 142), ladite branche secondaire se raccordant à ladite branche principale en un point de connexion (17) disposé entre la batterie (10) et lesdits composants électriques (11 à 13), le circuit de thermorégulation comprenant des première et deuxième boucles séparées dans lesquelles circulent respectivement un premier fluide caloporteur en échange thermique avec la batterie (10) et un deuxième fluide caloporteur en échange thermique avec lesdits composants électriques (11 à 13), les moyens de couplage thermique permettant de transférer de la chaleur d'une boucle à l'autre, **caractérisé en ce que** les moyens de couplage thermique comprennent une machine thermodynamique réversible incluant des premier et deuxième échangeurs (39, 40) respectivement couplés thermiquement aux premier et deuxième fluides caloporteurs.

5. Système selon la revendication précédente, **caractérisé en ce qu'**un circuit de thermorégulation comporte un unique échangeur (14) équipé de première et deuxième sorties (26, 29) pour alimenter respectivement en fluide caloporteur des branches principale et secondaire, ledit échangeur (14) étant agencé de sorte qu'une fraction de fluide caloporteur transférée à la batterie (10) par la branche secondaire subisse un échange thermique supérieur à celui que subit une fraction restante de fluide caloporteur transférée directement auxdits composants électriques (11 à 13) par l'intermédiaire de la branche principale.

6. Système selon la revendication 7, **caractérisé en ce qu'**un circuit de thermorégulation comporte des premier et deuxième échangeurs (141, 142) en série dans le sens de circulation d'un fluide caloporteur, reliés par une branche de raccordement (43), la branche principale se raccordant à ladite branche de raccordement (43).

7. Système selon l'une des revendications 10 et 11, **caractérisé en ce que** la deuxième boucle comprend au moins un échangeur (14, 141, 142) pour réaliser un échange thermique avec de l'air extérieur au véhicule.

8. Système selon l'une des revendications 10 à 12, **caractérisé en ce que** la première boucle comporte un dispositif de chauffage (37) du premier fluide caloporteur.

9. Véhicule à traction électrique, notamment de type automobile, équipé d'un système de régulation selon l'une des revendications 7 à 13.

## Patentansprüche

1. Verfahren zur Regelung der Temperatur der Batterie (10) eines Fahrzeugs mit Elektroantrieb, der auch einen Elektromotor (11) und seine Leistungselektronik umfasst, die beispielsweise ein Batterieladegerät (12) und einen Wechselrichter (13) umfasst, umfassend einen Schritt der thermischen Kopplung der Batterie (10) und von elektrischen Komponenten (11 bis 13) des Rests des Elektroantriebsstrangs des Fahrzeugs, umfassend die Verwendung eines Temperaturregelungskreislaufs, in dem Wärmeträgermedium fließt, wobei der Kreislauf so eingerichtet ist, dass er die Temperatur sowohl der Batterie (10) als auch der elektrischen Komponenten (11 bis 13) durch Wärmeaustausch mit dem Wärmeträgermedium steuert, umfassend eine Modulation der Temperatur des Wärmeträgermediums über mindestens einen Tauscher (14, 141, 142), um einen Wärmeaustausch mit der Außenluft des Fahrzeugs auszuführen, und umfassend, dass im Anschluss an den Wärmeaustausch des Wärmeträgermediums mit der Außenluft des Fahrzeugs nur ein Anteil des Wärmeträgermediums bis zur Batterie (10) zu deren Temperaturregelung transferiert wird, während der restliche Anteil des Wärmeträgermediums direkt zu den elektrischen Komponenten (11 bis 13) zu deren Temperaturregelung transferiert wird, wobei der zur Batterie (10) transferierte Anteil des Wärmeträgermediums einen stärkeren Wärmeaustausch erfährt als der restliche Anteil des Wärmeträgermediums, der direkt zu den elektrischen Komponenten (11 bis 13) transferiert wird, wobei diese Wärmeaustausche stromauf der Batterie (10) beziehungsweise der elektrischen Komponenten (11 bis 13) ausgeführt werden, wobei der Temperaturregelungskreislauf erste und zweite getrennte Kreise umfasst, in denen ein erstes Wärmeträgermedium im Wärmeaustausch mit der Batterie (10) beziehungsweise ein zweites Wärmeträgermedium im Wärmeaustausch mit den elektrischen Komponenten (11 bis 13) fließt, wobei der Schritt der thermischen Kopplung zwischen der Batterie (10) und den elektrischen Komponenten (11 bis 13) einen Wärmeübergang von einem Kreis auf den anderen zwischen dem ersten und dem zweiten Wärmeträgermedium umfasst, wobei das Verfahren **dadurch gekennzeichnet ist, dass** der Wärmeübergang die Verwendung einer reversiblen thermodynamischen Maschine umfasst, die erste und zweite Tauscher (39, 40) beinhaltet, die thermisch mit dem ersten beziehungsweise zweiten Wärmeträgermedium gekoppelt sind, um einen Wärmeaustausch auszuführen.

2. Verfahren nach dem vorhergehenden Anspruch, **dadurch gekennzeichnet, dass** zum Erwärmen der Batterie (10) der Wärmeübergang über die reversible thermodynamische Maschine ausgeführt wird, die wie eine Wärmepumpe verwendet wird, bei welcher der Kondensator und der Verdampfer aus dem ersten beziehungsweise zweiten Tauscher (39, 40) der Maschine bestehen.

3. Verfahren nach Anspruch 3, **dadurch gekennzeichnet, dass** zum Kühlen der Batterie die reversible thermodynamische Maschine wie eine Klimaanlage verwendet wird, bei welcher der Verdampfer und der Kondensator aus dem ersten beziehungsweise dem zweiten Tauscher (39, 40) der Maschine bestehen.

4. System zur Regelung der Temperatur der Batterie (10) eines Fahrzeugs mit Elektroantrieb, der auch einen Elektromotor (11) und seine Leistungselektronik umfasst, die beispielsweise ein Batterieladegerät (12) und einen Wechselrichter (13) umfasst, umfassend Mittel zur thermischen Kopplung zwischen der Batterie (10) und den elektrischen Komponenten (11 bis 13) des Rests des Elektroantriebsstrangs des Fahrzeugs, umfassend einen Temperaturregelungskreislauf, in dem ein Wärmeträgermedium fließt, wobei der Kreislauf so eingerichtet ist, dass er die Temperatur sowohl der Batterie (10) als auch der elektrischen Komponenten (11 bis 13) durch Wärmeaustausch mit dem Wärmeträgermedium steuert, dass der Kreislauf Mittel zum Modulieren der Temperatur des Wärmeträgermediums über mindestens einen Tauscher (14, 141, 142) umfasst, um einen Wärmeaustausch mit der Außenluft des Fahrzeugs auszuführen, und dass der Kreislauf einen Hauptzweig, der die elektrischen Komponenten (11 bis 13) von einem Ausgang (26) des mindestens einen Tauschers (14, 141, 142) aus mit Wärmeträgermedium versorgt, und einen Nebenzweig, der die Batterie (10) von einem anderen Ausgang (29) des mindestens einen Tauschers (14, 141, 142) aus mit Wärmeträgermedium versorgt, umfasst, wobei der Nebenzweig mit dem Hauptzweig in einem Anschlusspunkt (17) verbunden ist, der zwischen der Batterie (10) und den elektrischen Komponenten (11 bis 13) angeordnet ist, wobei der Temperaturregelungskreislauf erste und zweite getrennte Kreise umfasst, in denen ein erstes Wärmeträgermedium im Wärmeaustausch mit der Batterie (10) beziehungsweise ein zweites Wärmeträgermedium im Wärmeaustausch mit den elektrischen Komponenten (11 bis 13) fließt, wobei die Mittel zur thermischen Kopplung es ermöglichen, Wärme von einem Kreis auf den anderen zu transferieren, **dadurch gekennzeichnet, dass** die Mittel zur thermischen Kopplung eine reversible thermodynamische Maschine umfassen, die erste und zweite Tauscher (39, 40) beinhaltet, die thermisch mit dem ersten beziehungsweise dem zweiten Wärmeträgermedium gekoppelt sind.

5. System nach dem vorhergehenden Anspruch, **dadurch gekennzeichnet, dass** ein Temperaturregelungskreislauf einen einzigen Tauscher (14) umfasst, der mit ersten und zweiten Ausgängen (26, 29) zum Versorgen des Hauptzweigs beziehungsweise des Nebenzweigs mit Wärmeträgermedium ausgestattet ist, wobei der Tauscher (14) so eingerichtet ist, dass ein Anteil des Wärmeträgermediums, der vom Nebenzweig zur Batterie (10) transferiert wird, einen stärkeren Wärmeaustausch erfährt als der restliche Anteil des Wärmeträgermediums, der über den Hauptzweig direkt zu den elektrischen Komponenten (11 bis 13) transferiert wird.

6. System nach Anspruch 7, **dadurch gekennzeichnet, dass** der Temperaturregelungskreislauf erste und zweite Tauscher (141, 142) in Reihe in Fließrichtung eines Wärmeträgermediums umfasst, die durch einen Verbindungszweig (43) angebunden sind, wobei der Hauptzweig mit dem Verbindungszweig (43) verbunden ist.

7. System nach einem der Ansprüche 10 und 11, **dadurch gekennzeichnet, dass** der zweite Kreis mindestens einen Tauscher (14, 141, 142) umfasst, um einen Wärmeaustausch mit der Außenluft des Fahrzeugs auszuführen.

8. System nach einem der Ansprüche 10 bis 12, **dadurch gekennzeichnet, dass** der erste Kreis eine Vorrichtung zum Erwärmen (37) des ersten Wärmeträgermediums umfasst.

9. Fahrzeug mit Elektroantrieb, insbesondere Kraftfahrzeug, das mit einem Regelungssystem nach einem der Ansprüche 7 bis 13 ausgestattet ist.

## Claims

1. Method for controlling the temperature of the battery (10) of an electric vehicle also including an electric motor (11) and the power electronics thereof, said electronics comprising for example a battery charger (12) and an inverter (13), comprising a step of thermal coupling of said battery (10) and electric components (11 to 13) of the rest of the electric power train of the vehicle, comprising the use of a temperature control circuit in which heat transfer fluid circulates, said circuit being arranged so as to control the temperature of both said battery (10) and said electric components (11 to 13) by heat exchange with the heat transfer fluid, comprising a modulation of the temperature of the heat transfer fluid by means of at least one exchanger (14, 141, 142) to perform a heat exchange with air outside the vehicle and comprising that following the heat transfer fluid heat exchange with the air outside the vehicle, only a fraction of heat transfer fluid is transferred to the battery (10) for the temperature control thereof, the remaining fraction of heat transfer fluid being transferred directly to said electric components (11 to 13) for the temperature control thereof, the fraction of heat transfer fluid transferred to the battery (10) undergoing a heat exchange greater than the heat exchange undergone by the remaining fraction of heat transfer fluid transferred directly to said electric components (11 to 13), these heat exchanges being performed upstream of the battery (10) and said electric components (11 to 13) respectively, the temperature control circuit comprising separate first and second loops in which a first heat transfer fluid in heat exchange with the battery (10) and a second heat transfer fluid in heat exchange with said electric components (11 to 13) circulate respectively, the step of thermal coupling between the battery (10) and said electric components (11 to 13) comprising a heat transfer from one loop to the other between said first and second heat transfer fluids, the method being **characterized in that** said heat transfer comprises the use of a reversible heat engine including first and second exchangers (39, 40) respectively thermally coupled to the first and second heat transfer fluids to perform a heat exchange.

2. Method according to the previous claim, **characterized in that** to heat the battery (10), said heat transfer is performed by means of the reversible heat engine used as a heat pump the condenser and evaporator of which are formed by the first and second exchangers (39, 40) of said engine respectively.

3. Method according to Claim 3, **characterized in that** to cool the battery, the reversible heat engine is used as an air conditioning unit the evaporator and condenser of which are formed by the first and second exchangers (39, 40) of said engine respectively.

4. System for controlling the temperature of a battery (10) of an electric vehicle also including an electric motor (11) and the power electronics thereof, said electronics comprising for example a battery charger (12) and an inverter (13), comprising thermal coupling means between said battery (10) and electric components (11 to 13) of the rest of the electric power train of the vehicle, including a temperature control circuit in which heat transfer fluid circulates, said circuit being arranged so as to control the temperature of both said battery (10) and said electric components (11 to 13) by heat exchange with the heat transfer fluid, in that the circuit comprises means for modulating the temperature of the heat transfer fluid by means of at least one exchanger (14, 141, 142) to perform a heat exchange with air outside the vehicle and in that the circuit comprises a main branch supplying said electric components (11 to 13) with heat transfer fluid from one outlet (26) of said at least one exchanger (14, 141, 142), and a secondary branch supplying the battery (10) with heat transfer fluid from another outlet (29) of said at least one exchanger (14, 141, 142), said secondary branch connecting to said main branch at a connection point (17) placed between the battery (10) and said electric components (11 to 13), the temperature control circuit comprising separate first and second loops in which a first heat transfer fluid in heat exchange with the battery (10) and a second heat transfer fluid in heat exchange with said electric components (11 to 13) circulate respectively, the thermal coupling means making it possible to transfer heat from one loop to the other, **characterized in that** the thermal coupling means comprise a reversible heat engine including first and second exchangers (39, 40) respectively thermally coupled to the first and second heat transfer fluids.

5. System according to the previous claim, **characterized in that** a temperature control circuit includes a single exchanger (14) provided with first and second outlets (26, 29) to supply main and secondary branches with heat transfer fluid respectively, said exchanger (14) being arranged so that a fraction of heat transfer fluid transferred to the battery (10) by the secondary branch undergoes a heat exchange greater than the heat exchange undergone by a remaining fraction of heat transfer fluid transferred directly to said electric components (11 to 13) by means of the main branch.

6. System according to Claim 7, **characterized in that** a temperature control circuit includes first and second exchangers (141, 142) in series in the direction of circulation of a heat transfer fluid, linked by a connecting branch (43), the main branch connecting to said connecting branch (43).

7. System according to one of Claims 10 and 11, **characterized in that** the second loop comprises at least one exchanger (14, 141, 142) to perform a heat exchange with air outside the vehicle.

8. System according to one of Claims 10 to 12, **characterized in that** the first loop includes a device (37) for heating the first heat transfer fluid.

9. Electric vehicle, particularly of the automobile type, provided with a control system according to one of Claims 7 to 13.
